# EUROPEAN PATENT APPLICATION

(11) **EP 2 228 765 A1**
(43) Date of publication of application: **15.09.2010**
(21) Application number: 08855035.5
(22) Date of filing: 27.11.2008
(51) Int. Cl.: G06Q 50/00

(54) **DATA PROCESSING SYSTEM**

(30) Priority: 30.11.2007 JP 2007309840
(71) Applicant: Japan Tobacco Inc., Tokyo 105-8422 (JP)
(72) Inventor: SHIMO, Hisaaki, Hiroshima 720-0822 (JP); WATANABE, Hiroshi, Tokyo 105-8422 (JP)
(74) Representative: HOFFMANN EITLE
(86) International application number: PCT/JP2008/003495
(87) International publication number: WO 2009/069300

(57) **Abstract**

A data processing system detects an ordinary consumer positioned in a specific space using an ultrasonic sensor, and detects specific temperature generated from the specific consumable commodity consumed by the ordinary consumer using an IR sensor. In this process, a sensor driving unit integrally moves the ultrasonic sensor and the IR sensor so as to direct them to the ordinary consumer whose position is detected, allows the IR sensor directed to the ordinary consumer to detect a specific temperature, and records the specific temperature and so forth as a consumption behavior. Accordingly, data regarding the consumption behavior, which is uncollectible at the points of time of order intake, production, shipping and selling of the specific consumable commodity, may be collected, making use of the specific temperature generated when the specific consumable commodity is consumed by the ordinary consumer. In this way, the present invention provides a data processing system capable of efficiently collecting data regarding the consumption behavior of the specific consumable commodity, such as a beverage kept hot or cold.

## Description

### TECHNICAL FIELD

The present invention relates to a data processing system which collects data regarding a consumption behavior of a specific consumable commodity at a specific space.

### BACKGROUND ART

For the purpose of managing sales of commodities, there has been proposed a cooperative sales management system having contents of a database of a record file, which was prepared at the time of estimation, are linked in an integrated manner to the individual scenes of orders, sales, up to claim, based on centralized administrative control.

In this sort of system, data is managed based on the centralized administrative control in an integrated manner, from the scenes of orders, sales, up to claim, while making reference to the database prepared at the time of estimation. Order intake/sales probability of a certain commodity is calculated according to a predetermined rule, referring to a plurality of probabilities, such as probability of investment to the commodity by the customers, competitive advantage in order intake by middlemen who participate into dealing of the commodities rather than direct selling, and competitive probability expressing advantage of marketing company *per se* over the competitors, and thereby monthly and periodic order intake/sales forecast and budget control are made conforming to business records of a company (see Patent Document 1, for example).

There has also been proposed a sales results data collection system which finds commodity sales on the store basis and commodity, supplier basis, to thereby collect useful information on sales results. In this sort of system, for example, sales results data which include sales data representing quantify of commodities sold by the individual stores owned by an agent, store code for identifying the stores, manufacturer code for identifying commodity supplier/manufacturer representing supply base of the commodity and so forth, are entered into a database.

From the database, sales results data are extracted based on a data extraction condition specified through a client terminal, and a base data file, based on which a report is prepared, is prepared. The client terminal prepares a sales results report which contains data of commodity sales collected on the basis of commodity supplier/manufacturers, based on the received base data file (see Patent Document 2, for example).

There has been still another proposal on collecting data on start of smoking, as a consumption behavior by an ordinary consumer, by communication using an RFID (Radio Frequency Identification) tag reader mounted on a lighter, with RFID chips preliminarily attached to the end portion and filter portion of a paper-rolled cigarette (see Patent Document 3, for example).
[Patent Document 1] Japanese Laid-Open Patent Publication No. 2005-301396
[Patent Document 2] Japanese Laid-Open Patent Publication No. 2006-139594
[Patent Document 3] Japanese Laid-Open Patent Publication No. 2005-198538

### DISCLOSURE OF THE INVENTION

As described in the above, various proposals have been made on collection and management of data regarding order status, production status, shipping status, sales status and so forth, for the purpose of research and development of products. The data processing systems can, however, collect only data regarding results of order placed by the ordinary consumers and selling stores to brokers and manufacturers, production results at the manufacturers, results of shipping from the manufactures to the brokers and selling stores, and results of sales by the selling stores to the ordinary consumers.

In other words, the ordinary consumers, as the end users, consume the commodity, but data regarding the state of commodity are uncollectible. For this reason, the data having been collected by the conventional data processing systems are those mainly regarding the manufacturers and selling stores, so that it has been difficult to find out consumption behaviors and taste behavior of the ordinary consumers.

It may, therefore, be difficult to satisfy demands of the ordinary consumers, even if the data collected by the above-described data processing systems were adopted to research and development of the products. Accordingly, there has been partial practice of collecting data on consumption behavior, by user questionnaire.

For this purpose, there are many commodities sold with attached questionnaire postcards. This style of user questionnaire is, however, a manned sampling study, and needs human-wave tactics for sorting the collected data. Accordingly, the human cost necessary therefore may be huge, and this makes a large-scale study difficult.

On the other hand, user questionnaires are available also on so-called web sites on the Internet. In this case, a data processing system can automatically collect data on consumption behaviors of the ordinary consumers.

It is, however, still difficult to successfully collect questionnaire data free of charge. The above-described questionnaire may, therefore, need some service such as providing a prize by lottery.

In addition, the data collection in this case may fail in correctly reflecting a real condition, because a large volume of inappropriate entry may be made by the ordinary consumers who want the prize without actually consuming the commodity.

The present invention is conceived after considering the above-described problems, and is to provide a data processing system capable of effectively collecting data regarding a consumption behavior of a specific consumable commodity by ordinary consumers.

According to the present invention, there is provided a data processing system which collects data regarding a consumption behavior of a specific consumable commodity at a specific space. The data processing system includes an ultrasonic sensor which detects an ordinary consumer positioned in the specific space; an IR sensor which detects a specific temperature generated from the specific consumable commodity consumed by the ordinary consumer; a sensor driving unit which integrally moves the ultrasonic sensor and the IR sensor so as to direct them to the ordinary consumer whose position is detected; and a consumption recording unit which records the specific temperature detected by the IR sensor.

According to the data processing system of the present invention, the ordinary consumer positioned in the specific space is detected by the ultrasonic sensor, and the specific temperature generated from the specific consumable commodity consumed by the ordinary consumer is detected by the IR sensor. In this process, the sensor driving unit integrally moves the ultrasonic sensor and the IR sensor so as to direct them to the ordinary consumer whose position is detected, and the consumption recording unit records the specific temperature detected by the IR sensor kept in this state. Accordingly, the data regarding the consumption behavior, which is uncollectible at the points of time of order intake, production, shipping and selling of the specific consumable commodity, may be collected, making use of the specific temperature generated when the specific consumable commodity is consumed by the ordinary consumer. Since the ordinary consumer may freely position in the specific space, so that it may be difficult to detect the specific temperature of the specific consumable commodity from the specific space, simply by the IR sensor. However, the position of the ordinary consumer may be specified by the ultrasonic sensor, and the specific temperature may therefore be detected while directing the IR sensor to the ordinary consumer. As a consequence, the specific temperature of the specific consumable commodity may successfully be sensed by the IR sensor.

In the data processing system of the present invention, the consumption recording unit may record the specific temperature together with the detected position of the ordinary consumer.

The data processing system of the present invention may further include a sensor unit in which the IR sensor and the ultrasonic sensor are integrated.

The data processing system of the present invention may further have a commodity reader unit which acquires commodity ID data from the specific consumable commodity consumed in the specific space, and the consumption recording unit may record the detected specific temperature together with the commodity ID data.

The data processing system of the present invention may further have a contents storage unit which stores digital contents; a contents output unit which outputs the digital contents to the specific space; and an output control unit which outputs the digital contents corresponding to the detected specific temperature.

The data processing system of the present invention may further have a contents storage unit which stores digital contents; a contents output unit which outputs the digital contents to the specific space; and an output control unit which outputs the digital contents corresponding to the detected specific temperature and the commodity ID data.

In the data processing system of the present invention, the specific consumable commodity may be composed of a beverage contained in a container which is kept hot or cold,
the specific space may be composed of a drinking space, and the IR sensor may detect the specific temperature from the beverage.

In the data processing system of the present invention, the specific consumable commodity may be composed of a warmed or cooled food, the specific space may be composed of an eating space, and the IR sensor may detect the specific temperature from the food.

In the data processing system of the present invention, the specific consumable commodity may be composed of a cigarette, the specific space may be composed of a smoking space, and the IR sensor may detect the specific temperature from the a burning cigarette.

The data processing system of the present invention may further have a fire judgment unit which judges occurrence of fire accident at the specific space based on the specific temperature sensed by the temperature sensing unit.

The various constituents of the present invention may be good enough insofar as they are configured to embody the individual functions. For, example, they may be embodied as dedicated hardware configured to express predetermined functions, a data processing system imparted with predetermined functions by a computer program, a predetermined function embodied on the data processing system by a computer program, and arbitrary combinations of these constituents.

Each of the various constituents of the present invention is not always necessarily an independent entity, and instead a plurality of constituents may configure a single component, a single constituent may be configured by a plurality of components, a certain constituent may be a part of any other constituent, and a part of certain constituent and a part of other constituent may overlap with each other, for example.

According to the data processing system of the present invention, the ordinary consumer positioned in the specific space is detected by the ultrasonic sensor, and the specific temperature generated from the specific consumable commodity consumed by the ordinary consumer is detected by the IR sensor. In this process, the sensor driving unit integrally moves the ultrasonic sensor and the IR sensor so as to direct them to the ordinary consumer whose position is detected, and the consumption recording unlit records the specific temperature detected by the IR sensor kept in this state. Accordingly, the data regarding the consumption behavior, which is uncollectible at the points of time of order intake, production, shipping and selling of the specific consumable commodity, may be collected, making use of the specific temperature generated when the specific consumable commodity is consumed by the ordinary consumer. Since the ordinary consumer may freely position in the specific space, so that it may be difficult to detect the specific temperature of the specific consumable commodity from the specific space, simply by the IR sensor. However, the position of the ordinary consumer may be specified by the ultrasonic sensor, and the specific temperature may therefore be detected while directing the IR sensor to the ordinary consumer. As a consequence, for an exemplary case where a warmed or cooled beverage as the specific consumable commodity is consumed in the drinking space as the specific space, the specific temperature may consecutively be detected, and data regarding the consumption behaviors of the ordinary consumers may appropriately be collected.

### BRIEF DESCRIPTION OF THE DRAWINGS

The above and other objects, features and advantages of the present invention will be more apparent from the following description of certain preferred embodiments taken in conjunction with the accompanying drawings.
FIG. 1 is a schematic block diagram illustrating a logical structure of a data processing system in one embodiment of the present invention.
FIG. 2 is a schematic perspective view illustrating an internal layout of a drinking space as the specific space.
FIG. 3 is a perspective view illustrating a structure of a sensor driving unit.
FIG. 4 is a perspective view illustrating an appearance of an in-cup beverage representing the specific consumable commodity;
FIG. 5 is a schematic block diagram illustrating a physical structure of the data processing system.
FIG. 6 is a flow chart illustrating process operations of the data processing system.
FIG. 7 is a schematic drawing illustrating a data structure of the consumption behavior collected in a data form.
FIG. 8 is a schematic perspective view illustrating an internal layout of a smoking space representing the specific space in a modified example.
FIG. 9 is a schematic block diagram illustrating a physical structure of the data processing system of the modified example.
FIG. 10 is a flow chart illustrating process operations of the data processing system of the modified example.

### BEST MODE FOR CARRYING OUT THE INVENTION

One embodiment of the present invention will be explained referring to the attached drawings. A data processing system 100 of this embodiment is used for collecting data regarding consumption behavior of an in-cup beverage CD which represents the specific consumable commodity, at a drinking space DS which represents a specific space.

For this purpose, the data processing system 100 has an ultrasonic sensor 111 which detects an ordinary consumer positioned in the drinking space DS; an IR sensor 121 which detects a specific temperature generated from the in-cup beverage CD consumed by the ordinary consumer; a sensor driving unit 130 which integrally moves the ultrasonic sensor 111 and the IR sensor 121 so as to direct them to the ordinary consumer whose position is detected; and a consumption recording unit 150 which records the specific temperature detected by the IR sensor 121.

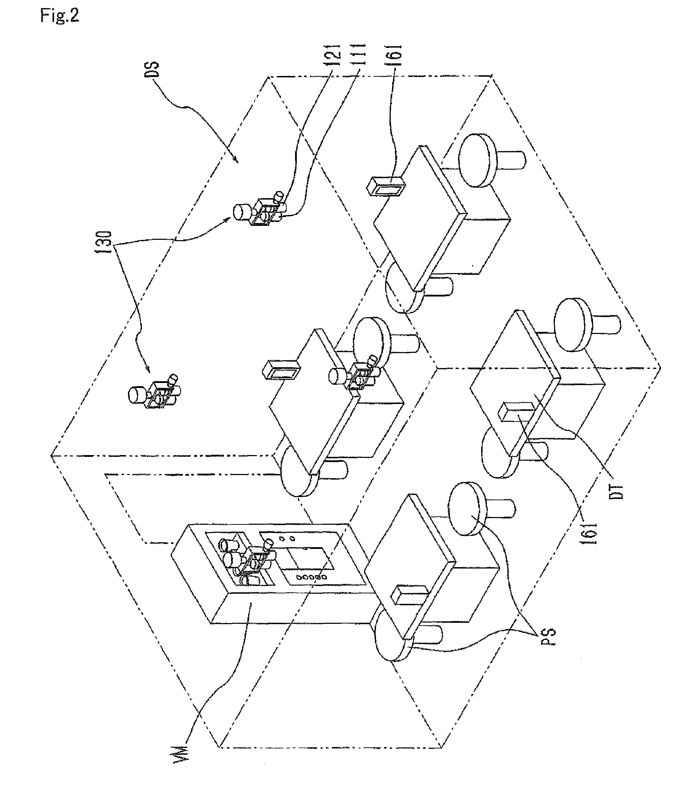

More specifically, the drinking space DS, to which the data processing system 100 of this embodiment is adopted, may typically be composed of one room available in a building as shown in Fig. 2. In the drinking space DS, there are a plurality of drink tables DT disposed in a distributed manner, and a pair of seats PS are provided to each drink table DT.

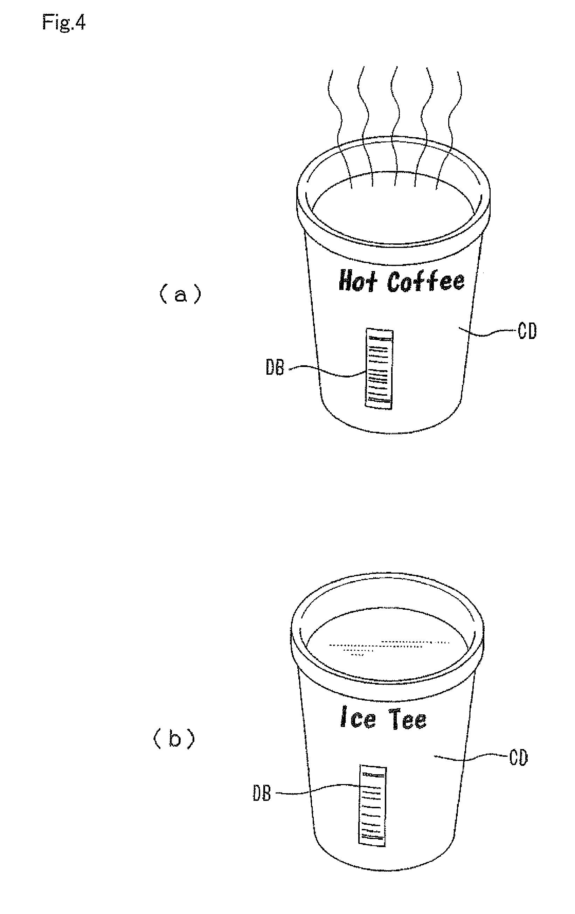

The drinking space DS is further provided, for example, with a vending machine VM, and the vending machine VM sells in-cup beverages CD. Each of the in-cup beverages CD is a specific consumable commodity using a so-called paper cup as a container, and having hot or cold beverage contained therein, as illustrated in FIG. 4.

Each in-cup beverage CD sold by the vending machine VM in this embodiment is available with a dedicated cup, on the outer surface of which a commodity ID data is given in a form of bar code DB.

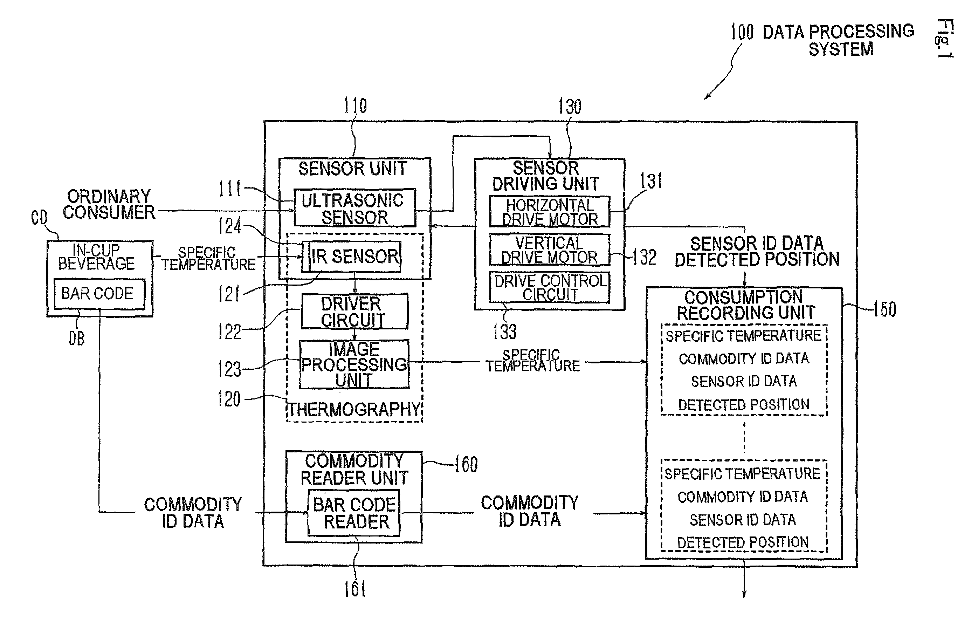

Accordingly, as illustrated in FIG. 2, a bar code reader 161 is provided to each drink table DT. With the bar code reader 161, as illustrated in FIG. 1, a commodity reader unit 160 which acquire the commodity ID data from the bar code DB of the in-cup beverage CD is embodied.

There are the same number of the ultrasonic sensors 111 and the IR sensors 121 as the drink tables DT, respectively, wherein one ultrasonic sensor 111 and one IR sensor 121 are integrally supported by a sensor driving unit 130 to give a single sensor unit 110.

The ultrasonic sensor 111 and the IR sensor 121 thus supported by the sensor driving unit 130 are respectively provided typically above the plurality of drink tables DT in the drinking space DS, as illustrated in FIG. 2.

The ultrasonic sensor 111 is composed of a passive-type existing device used for so-called human sensor and so forth. This sort of ultrasonic sensor may be exemplified by those of transmission type configured by an ultrasonic oscillator and an ultrasonic receiver opposed with each other, so as to detect the ordinary consumer based on interruption of ultrasonic wave; reflection type configured to emit directional ultrasonic wave, and to receive the ultrasonic wave reflected on the ordinary consumer, to thereby detect a position of the ordinary consumer based on difference time; Doppler type similarly configured to receive the ultrasonic wave reflected on the ordinary consumer, to thereby detect movement of the ordinary consumer based on changes in frequency; and so forth. Those of reflection type described in the above may be adoptable to the ultrasonic sensors 111 in this embodiment, since they are used to detect the ordinary consumers positioned at the seats PS from the upper side.

The IR sensor 121 is formed as a part of a thermography 120. The thermography 120 has, as illustrated in FIG. 1, not only the IR sensor 121, but also a driver circuit 122, an image processing unit 123, an optical filter 124, and so forth.

Each IR sensor 121 is typically configured by a PtSi-type or InSb-type sensor having a detection sensitivity for short-wavelength region from 2 to 5 µm, InGaAs-type sensor having a detection sensitivity for near-infrared region from 0.9 to 1.7 µm , MCT-type sensor having a detection sensitivity for long-wavelength region from 8 to 14 µm, QWIP-type sensor having a detection sensitivity for long-wavelength region from 8 to 9.2 µm, micro-bolometer-type sensor or ferroelectric-type sensor having a detection sensitivity for long-wavelength from 8 to 14 µm, and the like, for example.

The IR sensor 121 is configured to have a detection sensitivity corresponded to heating temperature or cooling temperature of the in-cup beverage CD, while being attached with an optical filter 124 having predetermined characteristics. The driver circuit 122 produces a temperature distribution image corresponded to the heating temperature or cooling temperature of the in-cup beverage CD, using output signals from the IR sensor 121. The image processing unit 123 detects a specific temperature from the temperature distribution image output from the driver circuit 122.

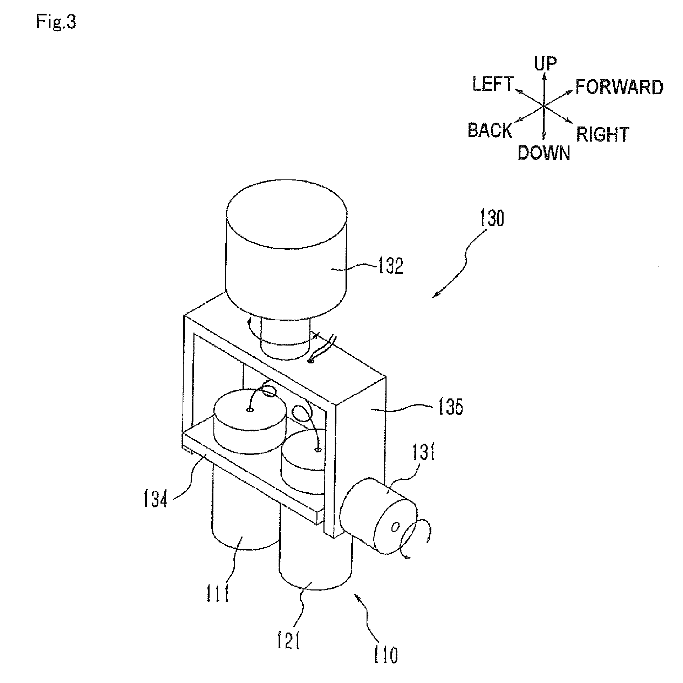

The sensor driving unit 130 is configured, as illustrated in FIG. 3, so that a bracket 134 supports the ultrasonic sensor 111 and the IR sensor 121 so as to allow detection downward. The bracket 134 is supported by a horizontal drive shaft of a horizontal drive motor 131 so as to be freely rotatable therearound.

The horizontal drive motor 131 and the bracket 134 are supported by a U-shape support frame 135. The support frame 135 is supported by a vertical drive shaft of a vertical drive motor 132 so as to be freely rotatable therearound.

Accordingly, the ultrasonic sensor 111 and the IR sensor 121 are supported by the sensor driving unit 130, so as to freely scan the lower side in all directions from front to back and from right to left. As illustrated in FIG. 1, the sensor driving unit 130 also has a drive control circuit 133. The drive control circuit 133 controls the horizontal drive motor 131 and the vertical drive motor 132 in a feedback manner, so as to direct the sensors to the ordinary consumer detected by the ultrasonic sensor 111.

In the data processing system 100 of this embodiment, as described previously, the sensor unit 110 is provided to each drink table DT, and a pair of seats PS are provided to each drink table DT.

Accordingly, when one drink table DT is used by one ordinary consumer, the ordinary consumer is detected by the sensor unit 110. However, when one drink table DT is used by two ordinary consumers, for example, a randomly sampled one of the ordinary consumers is detected by the sensor unit 110.

Each of the plurality of sensor units 110 is given sensor ID data. As described in the above, the sensor unit 110 detects a position of the ordinary consumer who takes one of the seats PS of the correspondent drink table DT.

Accordingly, when the ordinary consumer is detected by the sensor unit 110, the sensor driving unit 130 outputs the sensor ID data and the detected position to the consumption recording unit 150, as illustrated in FIG. 1.

The consumption recording unit 150 then records the specific temperature detected by the IR sensor 121 directed to the ordinary consumer as described in the above, while correlating it with the above-described sensor ID data, the detected position, and the commodity ID data.

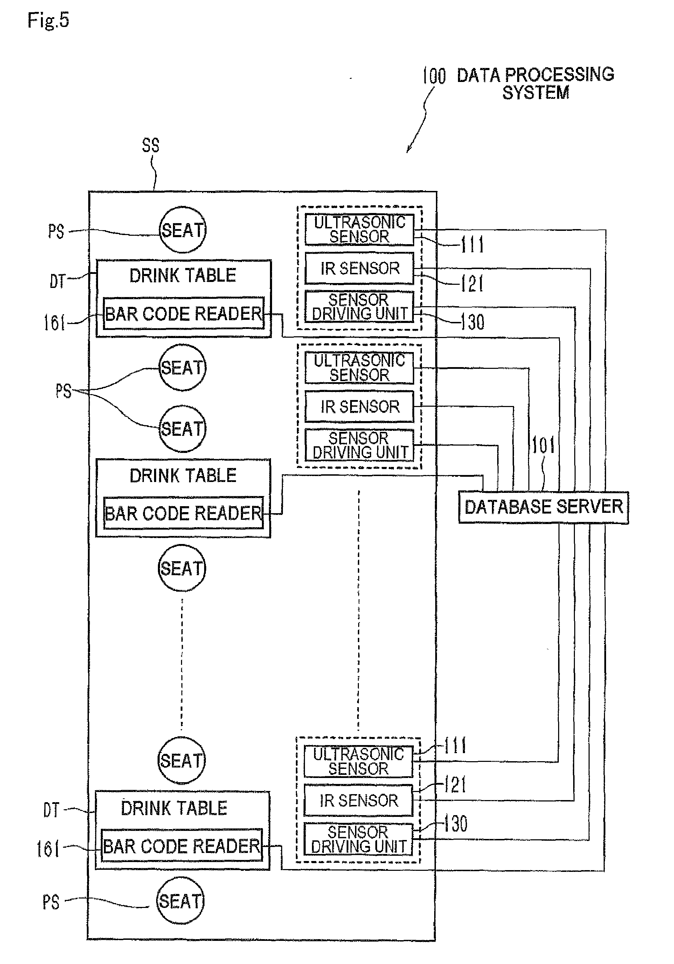

As illustrated in FIG. 5, a database server 101 is installed in the back yard of the drinking space DS, and the above-described plurality of ultrasonic sensors 111, the plurality of IR sensors 121, the plurality of sensor driving units 130, and the plurality of bar code readers 161 are connected to the database server 101.

The database server 101 has an appropriate computer program installed thereon. The above-described individual components 120, 150 and 160 are logically embodied, by the database server 101 which executes various process operations corresponding to the computer program.

The thermography 120 typically corresponds to a function which recognizes the specific temperatures respectively detected by the plurality of IR sensors 121 and converted into digital data outputs by the temperature processing circuit 112 as data in the database server 101 corresponding to the computer program.

The commodity reader unit 160 is typically corresponds to a function of recognizing the commodity ID data output from the bar code reader 161 corresponding to the computer program. The consumption recording unit 150 typically corresponds to a function which accumulates and outputs predetermined data in the database server 101 corresponding to the computer program.

In the above-described configuration, the data processing system 100 of this embodiment collects data relevant to consumption behavior of the ordinary consumer, typically by providing the drinking space DS to the ordinary consumer who consumes the in-cup beverage CD.

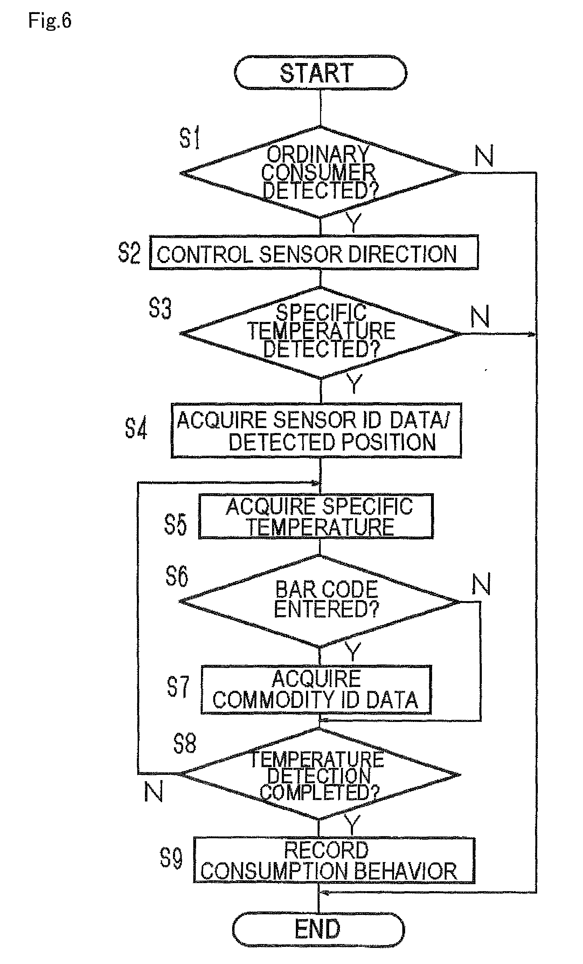

For more details, when the ordinary consumer enters the drinking space DS, buys the in-cup beverage CD from the vending machine VM, and takes the seat PS at the drink table DT, as illustrated in FIG. 6, the ordinary consumer is detected by the ultrasonic sensor 111 (step S1-Y).

The sensor driving unit 130 then integrally moves the ultrasonic sensor 111 and the IR sensor 121, so as to direct them to the ordinary consumer (step S2). Therefore, the ultrasonic sensor 111 is ready to detect the ordinary consumer in a more exact manner.

Since also the IR sensor 121 is directed to the ordinary consumer at the same time, so that if the ordinary consumer holds the hot or cold in-cup beverage CD, the specific temperature is detected (step S3-Y).

The data processing system 100 then acquires the sensor ID data of the sensor unit 110 which is now detecting the ordinary consumer and the in-cup beverage CD, and the detected position of the ordinary consumer to which the sensor unit 110 is directed, from the sensor driving unit 130 (step S4). In addition, also the specific temperature of the in-cup beverage CD, which is detected by the IR sensor 121 directed to the ordinary consumer as described in the above, is acquired (step S5).

In the drinking space DS of this embodiment, each drink table is given thereon with a guidance message, typically describing that "Users of this space are requested to have the reader read the bar codes on your cups."

Taking a glance at the message, the ordinary consumer makes the bar code DB on the in-cup beverage CD opposed to the bar code reader 161, and thereby the commodity ID data is acquired by the data processing system 100 (step S7).

When the ordinary consumer finishes drinking of the in-cup beverage CD, the detection of the specific temperature by the data processing system 100 comes to the end (step S8). The data processing system 100 then records the plurality of specific temperature acquired for every point of time of detection, together with the sensor ID data, the detected position, and the commodity ID data if already input, as the consumption behavior of the ordinary consumer (step S9).

The data processing system 100 of this embodiment is then able to collect data regarding the consumption behavior, which is uncollectible at the points of time of order intake, production, shipping and selling of the in-cup beverage CD, making use of the specific temperature generated when the in-cup beverage CD is consumed by the ordinary consumer as described in the above.

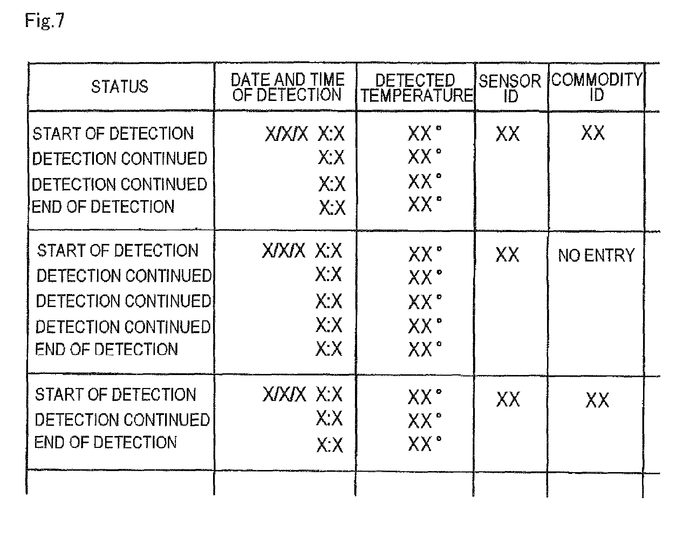

The consumption behavior thus collected in a data form may be composed of, for example as illustrated in FIG. 7, recorded data including the date and time of detection, detected temperature, the sensor ID data, the commodity ID data and so forth, for every status of detection of the specific temperature.

The data processing system 100 of this embodiment may contribute to research and development of new commodities, or consideration on more comfortable drinking space DS, by collecting data on the consumption behavior of the in-cup beverage CD by the ordinary consumer, and by outputting them in various styles as described above.

Since the ordinary consumer may freely position in the drinking space DS, so that it may be difficult to specify the in-cup beverage CD and to detect the specific temperature from the drinking space DS, simply by the IR sensor 121 alone.

However, according to the data processing system 100 of this embodiment, the position of the ordinary consumer may be specified by the ultrasonic sensor 111, and the specific temperature may therefore be detected while directing the IR sensor 121 to the ordinary consumer.

As a consequence, the IR sensor 121 may successfully be allowed to sense the specific temperature of the in-cup beverage CD. Accordingly, the data regarding the consumption behaviors of the ordinary consumers may appropriately be collected, by consecutively detecting the specific temperature of the hot or cold in-cup beverage CD, when it is drunk in the drinking space DS.

In particular, since the ultrasonic sensor 111 and the IR sensor 121 are integrally supported, so that the IR sensor 121 may successfully be directed to the ordinary consumer, by allowing the ultrasonic sensor 111 to detect position of the ordinary consumer and to direct itself to the ordinary consumer.

In addition, in the thermography 120, the optical filter 124, having optical characteristics respectively corresponded to the specific temperature, is attached to the IR sensor 121. Accordingly, various types of device described in the above may be adoptable to the IR sensor 121 having the above-described detection sensitivity, without necessarily limiting the system.

The present invention is not limited to this embodiment, instead allowing various modifications to be adopted without departing from the spirit of the invention. For example, the above-described embodiment exemplified a case where the specific consumable commodity, which produces the specific temperature as it is consumed, was composed of the in-cup beverage CD in one form of beverage contained in a paper cup.

However, the specific consumable commodity may alternatively be a canned beverage, PET-bottled beverage, hot or cold food, or cigarette consumed by burning (not illustrated).

The above-described embodiment exemplified a case where a pair of seats PS and a single sensor unit 110 were provided to each drink table DT, while assuming that the single drink table DT is often used by a single ordinary consumer.

Alternatively, a smaller number of the sensor unit 110 may be provided to a sufficiently large number of seats PS. The sensor unit 110 in this case may occasionally be unable to detect all of the plurality of ordinary consumers at the same time, but the object of the present invention may be achieved also by random sampling of a part the ordinary consumers.

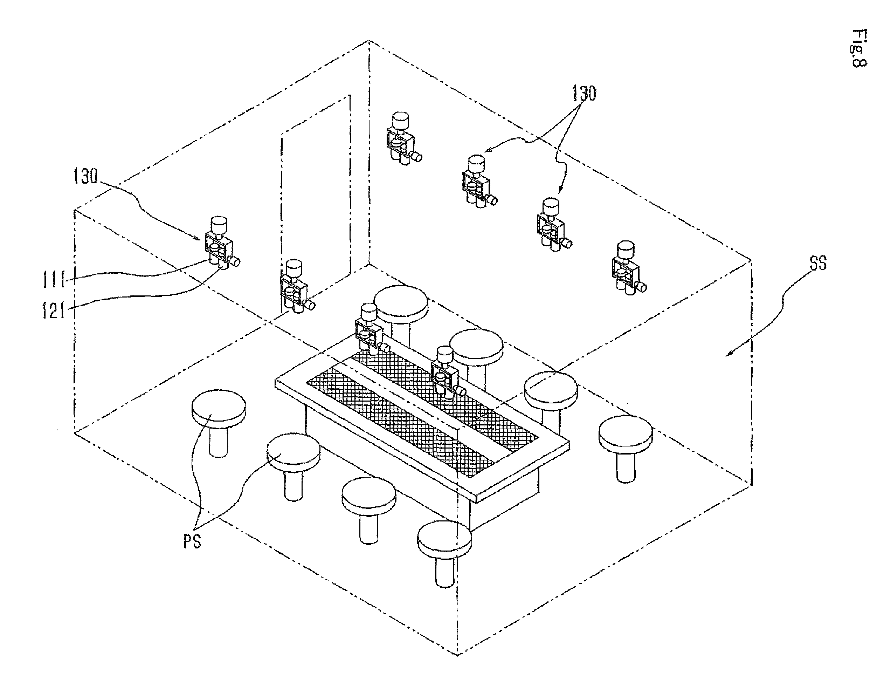

On the contrary, a single sensor unit 110 may be provided to every seat PS. For example, as illustrated in FIG. 8, the smoking space SS may be provided as the specific space, and the ultrasonic sensor 111 and the IR sensor 121 may be supported by the sensor driving unit 130 for every seat PS.

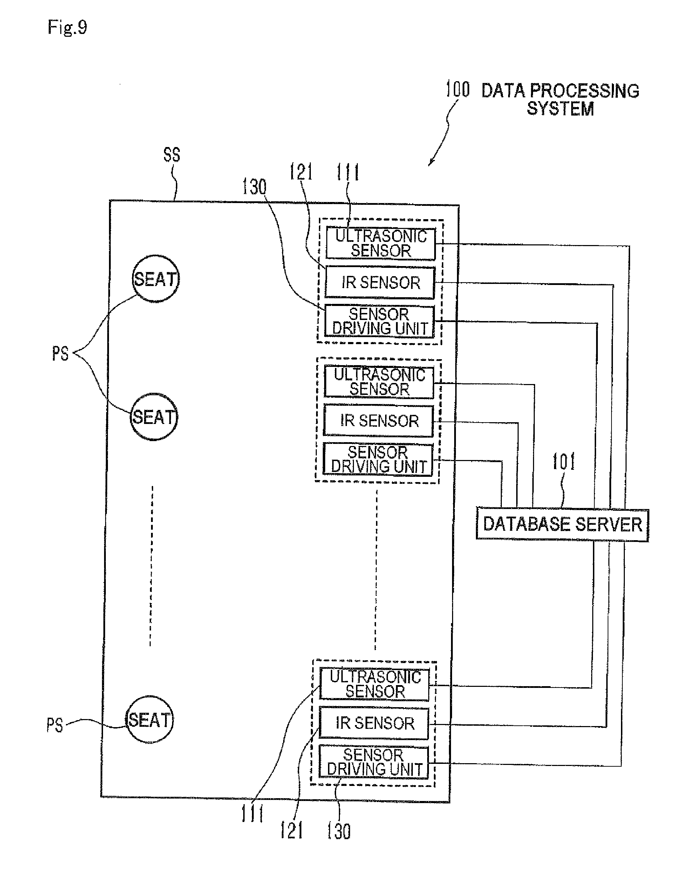

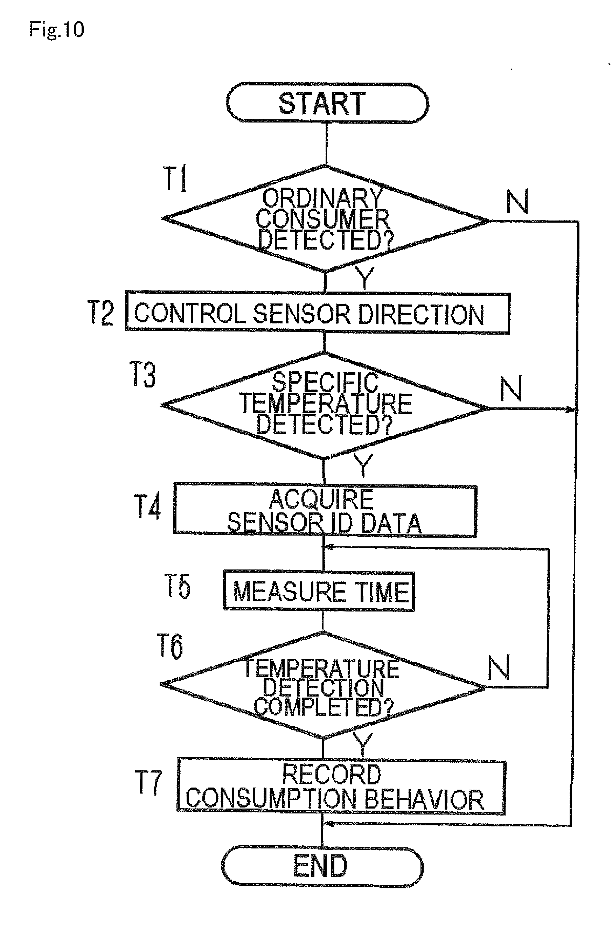

Still alternatively, the data processing system 100 may have no bar code reader as illustrated in FIG. 8 and FIG. 9. Also in this case, as illustrated FIG. 10, the data processing system 100 makes the sensor driving unit 130 direct itself to the ordinary consumer detected by the sensor unit 110 (steps T1, T2).

When the ordinary consumer lights a cigarette in this state, the behavior is detected by the IR sensor 121 as the specific temperature (step T3-Y). In this state, for example, the sensor ID data of the sensor unit 110 provided to each seat PS is acquired as position data (step T4).

Thereafter, when the cigarette is snuffed, the behavior is judged as the end of detection of the specific temperature (step T6), and duration of time over which the specific temperature was detected is measured to give a smoking time (step T5). The smoking time is then recorded as the consumption behavior, together with the sensor ID data (step T7).

For the case where the specific space is composed of the smoking space SS as described in the above, the specific temperature detected by the IR sensor 121 may be used for judging fire accident in the smoking space SS (not illustrated).

Of course, a fire alarm system is necessary for the smoking space SS. More specifically, it may now be understood that the above-described data processing system may appropriately detect the smoking behaviors of the ordinary consumers, making use of the IR sensor 121 of the fire alarm system.

The above-described embodiment exemplified the case where the data processing system 100 recorded the specific temperature together with the sensor ID data, the detected position and the commodity ID data, as the consumption behavior. This sort of data processing system 100 may alternatively collect the above-described consumption behavior together with the date and time of detection in a data form (not illustrated).

Similarly, the data processing system 100 may further have a space storage unit which stores space attribute data for each of the plurality of drinking space DS, and may collect the specific temperatures together with the space attribute data (not illustrated). In these cases, also data of trends in the consumption behaviors which may vary depending on date, time, place and so forth, may be collected.

The above-described embodiment exemplified the case where the data processing system 100 acquired the commodity ID data from the bar code DB of the in-cup beverage CD consumed in the drinking space DS, using the bar code reader 161.

Alternatively, an RFID chip having this sort of commodity ID data recorded therein may be attached to the specific consumable commodity, and the commodity ID data may be acquired using an RFID reader. In this case, it may now be possible to acquire the commodity ID data, without relying upon action by the ordinary consumer.

The above-described embodiment exemplified the case where the data processing system 100 collected data regarding the consumption behavior. Alternatively, the data processing system 100 may further have a contents storage unit which stores digital contents; a contents output unit which outputs the digital contents to the specific space, and an output control unit which outputs the digital contents corresponding to the specified consumption behavior (not illustrated).

In this case, the data processing system 100 may provide the digital contents to the ordinary consumer who consumes the specific consumable commodity in the specific space, in a highly appealing manner corresponding to the consumption behavior.

Of course, the above-described embodiment and a plurality of modified examples may be combined insofar as the bodies of which do not conflict with each other. The structures of the individual components, specifically described in the aforementioned embodiment and modified examples, may be modified in various ways insofar as the present invention may be satisfied.

## Claims

1. A data processing system which collects data regarding a consumption behavior of a specific consumable commodity at a specific space, comprising:
an ultrasonic sensor which detects an ordinary consumer positioned in said specific space;
an IR sensor which detects a specific temperature generated by said specific consumable commodity consumed by said ordinary consumer;
a sensor driving unit which integrally moves said ultrasonic sensor and said IR sensor so as to direct them to said ordinary consumer whose position is detected; and
a consumption recording unit which records said specific temperature detected by said IR sensor.

2. The data processing system as claimed in Claim 1,
wherein said consumption recording unit records said specific temperature together with the detected position of said ordinary consumer.

3. The data processing system as claimed in Claim 1 or 2, further comprising a sensor unit in which said IR sensor and said ultrasonic sensor are integrated.

4. The data processing system as claimed in any one of Claims 1 to 3, further comprising:
a commodity reader unit which acquires commodity ID data from said specific consumable commodity consumed at said specific space,
wherein said consumption recording unit records said detected specific temperature together with said commodity ID data.

5. The data processing system as claimed in any one of Claims 1 to 3, further comprising:
a contents storage unit which stores digital contents;
a contents output unit which outputs said digital contents to said specific space; and
an output control unit which outputs said digital contents corresponding to said detected specific temperature.

6. The data processing system as claimed in Claim 4, further comprising:
a contents storage unit which stores digital contents;
a contents output unit which outputs said digital contents to said specific space; and
an output control unit which outputs said digital contents corresponding to said detected specific temperature and said commodity ID data.

7. The data processing system as claimed in any one of Claims 1 to 6,
wherein said specific consumable commodity is composed of a beverage contained in a container which is kept hot or cold,
said specific space is composed of a drinking space, and
said IR sensor detects said specific temperature from said beverage.

8. The data processing system as claimed in any one of Claims 1 to 6,
wherein said specific consumable commodity is composed of a warmed or cooled food,
said specific space is composed of an eating space, and said IR sensor detects said specific temperature from said food.

9. The data processing system as claimed in any one of Claims 1 to 6,
wherein said specific consumable commodity is composed of a cigarette,
said specific space is composed of a smoking space, and said IR sensor detects said specific temperature from a burning cigarette.

10. The data processing system as claimed in Claim 9, further comprising:
a fire judgment unit which judges occurrence of fire accident in said specific space based on said specific temperature detected by said temperature sensing unit.
